(19) Europäisches Patentamt
European Patent Office
Office européen des brevets

(11) **EP 3 578 939 B1**

(12) **EUROPÄISCHE PATENTSCHRIFT**

(45) Veröffentlichungstag und Bekanntmachung des Hinweises auf die Patenterteilung:
**30.09.2020 Patentblatt 2020/40**

(51) Int Cl.:
*G01J 3/46* (2006.01)          *G01J 3/28* (2006.01)
*B41F 33/00* (2006.01)          *H04N 1/00* (2006.01)

(21) Anmeldenummer: **18176271.7**

(22) Anmeldetag: **06.06.2018**

(54) **VERFAHREN ZUR ONLINE-QUALITÄTSKONTROLLE VON DEKORDRUCKEN AUF TRÄGERMATERIALIEN**

ONLINE QUALITY CONTROL METHOD OF DECORATION PRINTING ON SUPPORT MATERIALS

PROCÉDÉ DE CONTRÔLE DE QUALITÉ EN LIGNE DE L'IMPRESSION DE DÉCORS SUR DES MATÉRIAUX SUPPORTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.12.2019 Patentblatt 2019/50**

(73) Patentinhaber: **Flooring Technologies Ltd.**
**Kalkara SCM1001 (MT)**

(72) Erfinder: **LEHNHOFF, Ingo**
**18347 Dierhagen (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
EP-A1- 2 777 942          WO-A1-03/047865
AT-A4- 504 213          DE-A1- 19 908 296
DE-B3-102013 104 208

## Beschreibung

### Gebiet der Erfindung

Die Erfindung stellt ein Verfahren und eine Vorrichtung zur Online-Qualitätskontrolle von Dekordrucken auf Trägermaterialien bereit, umfassend den Ähnlichkeitsvergleich von einem digitalen Ist-Bild und einem digitalen Soll-Bild der Druckdekore und das Anpassen des Dekordrucks bei Feststellung von Abweichungen der Farbwerte des digitalen Ist-Bildes von den Farbwerten des digitalen Soll-Bildes während der Produktion einer Charge von Trägermaterialien mit einer Dekorschicht.

## Beschreibung

Die Farbe ist ein wesentliches Merkmal eines Druckdekors, welches durch verschiedene Techniken, wie z.B. Tiefdruck oder Digitaldruck erzeugt wird. Bei jeder dieser Techniken wird die gewünschte Erscheinung des Drucks durch Überlagerung von verschiedenen Pigmentschichten der Grundfarben erzielt. Das Tiefdruckverfahren ist eine Drucktechnik, bei der die abzubildenden Elemente als Vertiefungen in einer Druckform z.B. einer Druckwalze vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand übertragen. Beim Digitaldruck hingegen wird das Druckbild direkt von einem Computer in einen Digitaldrucker wie z.B. ein Laserdrucker oder Tintenstrahldrucker übertragen, wobei die Verwendung von statischen Druckformen entfällt. Beim Digitaldruck werden üblicherweise die Grundfarben Cyan, Magenta, Gelb und Schwarz (CYMK) verwendet. Das CMYK-Farbmodel ist ein subtraktives Farbmodel, wobei die Abkürzung CMYK für die drei Farbbestandteile Cyan, Magenta, Yellow und den Schwarzanteil Key als Farbtiefe steht. Mit diesem Farbsystem lässt sich ein Farbraum (Gamut) abbilden, der vielen Anforderungen aus verschiedensten Bereichen genügt.

Ein offenes Problem, das in allen Bereichen der farbbasierten bzw. farbverarbeitenden Industrie ein zentrales Thema darstellt, ist die Erreichung eines hohen Grades an Farbtreue, in anderen Worten die Fähigkeit, vorgegebene Farben mit minimaler chromatischer Differenz in Bezug auf ein Original, und zwar insbesondere auch auf unterschiedlichen Trägermaterialien, zu reproduzieren. Ein wesentlicher Schritt hierfür ist die Analyse der Farbzusammensetzung eines vorgegebenen Originals. Ermittelte Farbunterschiede können dann dazu genutzt werden, die Farbzusammensetzung während des Druckes eines Dekors auf ein Trägermaterial oder einer Charge eines Trägermaterials mit einem Dekor anzupassen, sodass gewünschte Qualitätsanforderungen erreicht werden. Eine Qualitätsanforderung besteht unter anderem darin, dass Farbabweichungen zwischen einem digitalen Soll-Bild und einem digitalen Ist-Bild des gedruckten Dekors nur unterhalb eines vorgegebenen Sollwertes auftreten.

Die österreichische Patentanmeldung AT 504 213 A4 offenbart beispielsweise ein Verfahren zum Ähnlichkeitsvergleich von Gegenständen. Das Verfahren umfasst die Aufnahme von digitalen Gegenstandsbildern von zwei Gegenständen, wobei die digitalen Gegenstandsbilder entweder hyperspektrale Bilder oder Bilder unterschiedlicher Farbkanäle sein können.

Die DE 199 08 296 A1 offenbart ein Verfahren zur Steuerung der Farbgebung einer Druckmaschine. In dem Verfahren werden anhand Soll- und Istvorlagen Steuerinformationen für Farbwerksstellelemente einer Druckmaschine ermittelt.

WO 03/047865 offenbart eine Verpackungsmaschine die Vorrichtungen zum Erfassen eines Druckbildes aufweist, eine Steuer- und Regeleinheit, die einen Vergleich zu einer hinterlegten digitalisierten Sollform des Druckbildes durchführt sowie Mittel zur Weitergabe oder Weiterverwertung der ermittelten Vergleichswerte.

Die EP 2 777 942 A1 offenbart ein Verfahren zur Erzeugung von Druckdekoren mit gleichbleibender Qualität unabhängig vom verwendeten Druckverfahren sowie eine Vorrichtung zur Durchführung dieses Verfahrens.

Die DE 10 2013 104208 B3 offenbart ein Verfahren zur Farbeinstellung an einer Druckmaschine, insbesondere an einer Verpackungsdruckmaschine sowie eine Druckmaschine, insbesondere eine Verpackungsdruckmaschine.

Als Trägermaterialien eignen sich beispielsweise Papier, Glas, Metall, Folien, Holzwerkstoffplatten, insbesondere MDF- oder HDF-Platten, WPC-Platten, Furniere, Lackschichten, Kunststoffplatten und anorganische Trägerplatten. Bevorzugt gemäß der Erfindung sind Holzwerkstoffplatten.

Mit einem Dekor versehene Holzwerkstoffplatten werden häufig zur Herstellung von Fußbodenlaminat oder in Form von Wand- und Deckenverkleidungselementen verwendet. Zur Dekorierung der Holzwerkstoffplatten gibt es mehrere Ansätze. So wurde in der Vergangenheit häufig die Beschichtung von Holzwerkstoffplatten mit einem Dekorpapier genutzt, wobei der Vielfältigkeit an verschiedengemusterten Dekorpapieren keine Grenzen gesetzt sind. Als Alternative zur Verwendung von Dekorpapieren auf Holzwerkstoffplatten hat sich die Möglichkeit des direkten Bedruckens von Holzwerkstoffplatten entwickelt, wobei ein Bedrucken von Papier und dessen nachträgliches Kaschieren oder Direktbeschichten auf die Holzwerkstoffplatten entfällt. Die hierbei hauptsächlich zum Einsatz kommenden Drucktechniken sind die oben bereits erwähnten Tiefdruck- und Digitaldruckverfahren.

Der Digitaldruck ermöglicht die Herstellung eines Druckbildes mit besonders hoher Qualität durch eine höhere Auflösung und erlaubt des Weiteren ein breiteres Anwendungsspektrum bei hoher Flexibilität. Der Nachteil erhöhter Kosten der digitalen Drucktechnologie pro Druck, insbesondere im Vergleich mit konventionellen Druckverfahren wie dem Tiefdruckverfahren tritt dabei in den Hintergrund. Trotz der vielfältigen Vorteile des Digitaldrucks treten insbesondere dann Probleme auf, wenn eine Kombination mit anderen Druckverfahren erwünscht oder notwendig ist. Eine derartige Kombination des Digitaldrucks mit anderen Druckverfahren wie dem Tiefdruckverfahren kann z.B. auftreten, wenn ein Dekor einem Kunden vorgestellt wird, welches unter Verwendung von Digitaldruck mit einer entsprechend hohen Auflösung erstellt wurde und bei einer sich ggf. anschließenden Massenproduktion von bedruckten Holzwerkstoffplatten für dieses Dekor lediglich eine gravierte Dekordruckwalze mit einer geringeren Auflösung verwendet wird, sodass die beiden Drucke (d.h. der Druck des vorgestellten Musters und der Druck der hergestellten Massenware) bei einem visuellen Vergleich deutliche Unterschiede zeigen.

Ein weiteres offenes Problem besteht somit in der die Erreichung eines hohen Grades an Farbtreue, d.h. in der Fähigkeit, vorgegebene Farben mit minimaler chromatischer Differenz in Bezug auf ein Original, und zwar insbesondere auch bei Verwendung verschiedener Drucktechniken, zu reproduzieren.

Um die Probleme des Standes der Technik zu lösen, ist es notwendig, Online-Qualitätskontrollen während der Druckprozesse durchzuführen und gegebenenfalls Korrekturen während der Ausführung des Dekordrucks vorzunehmen. Voraussetzung für Online-Qualitätskontrollen und das Anpassen des Dekordrucks während dessen Ausführung ist das Vorliegen von Sollwerten des Dekors, anhand dessen ein Ähnlichkeitsvergleich mit den während der aktuellen Produktion gedruckten Ist-Werten des Dekors vorgenommen werden kann, um eventuelle Abweichungen der Ist-Werte von den Sollwerten eines Dekors feststellen zu können. Für solch einen Ähnlichkeitsvergleich können beispielsweise die Farbwerte der Dekore herangezogen werden.

Verfahren für die Farbanalyse eines Bildes und die Durchführung eines Ähnlichkeitsvergleichs zwischen zwei Gegenständen, wie etwa zwei Bildern, sind im Stand der Technik bekannt und werden beispielsweise beschrieben in AT 505556 A4, WO 2008034156 A1 und WO 2008080185 A2.

AT 505556 A4 betrifft ein Verfahren zur Analyse eines mit einer Anzahl von Grundfarben auf einem vorgegebenen Träger erstellten Bildes, dadurch gekennzeichnet, dass a) für eine vorgegebene Anzahl von Bildbereichen des Bildes für eine vorgegebene Anzahl von festgelegten unterschiedlichen spektralen Bereichen von Lichtwellenlängen die Reflektanz bestimmt bzw. gemessen wird, b) die gemessenen Reflektanzen in eine Reflektanzmatrix (R) eingetragen werden, c) für die Bestimmung der Reflektanzspektren der Mischfarben angenommen wird, dass die Reflektanz einer aus Grundfarben zusammengesetzte Mischfarbe mittels eines, insbesondere linearen, vorgegebenen Modells gebildet wird, d) die Gleichung R = f(C, S), insbesondere die lineare Gleichung $R = C \cdot S^T$, herangezogen wird, wobei C eine zu bestimmende Farbverteilungsmatrix ist, und e) mittels eines Optimierungsverfahrens die Farbverteilungsmatrix (C) und die Spektralmatrix (S) bei gegebener Reflektanzmatrix (R) bestimmt werden.

WO 2008034156 A1 betrifft ein Verfahren zum Ähnlichkeitsvergleich von Gegenständen bzw. von zwei Gegenständen aufgenommenen digitalen Gegenstandsbildern unter Anwendung statistischer Methoden. Erfindungsgemäß ist vorgesehen, dass aus den beiden Gegenstandsbildern idente bzw. deckungsgleiche Bildbereiche ausgewählt werden oder die beiden Gegenstandsbilder idente bzw. deckungsgleiche Bildbereiche darstellen, dass für jeden dieser beiden identen bzw. deckungsgleichen Bildbereiche mit derselben Funktion, die statistische Verteilung der Intensitäten der einzelnen Pixel und/oder von vorgegebenen Pixelbereichen ermittelt wird, dass die Ähnlichkeit der für die beiden identen bzw. deckungsgleichen Bildbereiche erhaltenen statistischen Verteilungen der Intensitäten mit statistischen Methoden, insbesondere mit einer Ähnlichkeitsfunktion, überprüft wird und dass das Ausmaß der Ähnlichkeit der beiden statistischen Verteilungen der Intensitäten als Maß für die Ähnlichkeit der beiden Gegenstandsbilder herangezogen wird.

WO 2008080185 A2 betrifft ein Verfahren zum Ähnlichkeitsvergleich von zwei Gegenständen, bei dem von den beiden Gegenständen aufgenommene digitale Gegenstandsbilder, insbesondere ein Ist-Bild und ein Sollbild, verglichen werden, wobei für den Vergleich aus den beiden Gegenstandsbildern idente bzw. deckungsgleiche Bereiche ausgewählt werden oder die beiden Gegenstandsbilder idente bzw. deckungsgleiche Bildbereiche darstellen, dadurch gekennzeichnet, dass jedes der von den beiden Gegenständen zur Verfügung gestellte bzw. herangezogene Gegenstandsbild, insbesondere das Ist-Bild und das Sollbild, einen Bildsatz von zumindest zwei Bildern, vorzugsweise von einer Vielzahl von Bildern umfasst, und dass für jeden der beiden Bildsätze die Intensitätswerte, insbesondere Grauwerte oder Farbwerte, für jeden Bildpunkt des Bildbereiches der einzelnen Bilder in Form eines Vektorpaars dargestellt werden. Mit diesen Merkmalen ist es möglich, numerische Werte zu erhalten, die allenfalls in Form eines Vektors angeordnet werden können, wobei diese numerischen Werte oder die Länge des Vektors als Maß für die Ähnlichkeit der beiden Gegenstandsbilder herangezogen werden können.

Die in AT 505556 A4, WO 2008034156 A1 und WO 2008080185 A2 offenbarten Verfahren nutzen als Grundlage des Ähnlichkeitsvergleichs bzw. der Farbanalyse eines Bildes hyperspektrale Bilder. Unter "hyperspektralem Sensorsystem" versteht man ein Sensorsystem, das Bilder von sehr vielen, eng beieinanderliegenden Wellenlängen aufzeichnen kann. Das Auge sieht die Umwelt multispektral in den Wellenlängen der Grundfarben Rot, Grün und Blau. Hyperspektrale Systeme zeichnen Daten von 20 bis 250 unterschiedlichen Kanälen auf, die von Wellenlängen im ultravioletten Bereich bis zum langwelligen Infrarot reichen. Der Vorteil von hyperspektralen Systemen ist, dass Bilder mit einer sehr hohen Detailgenauigkeit und Auflösung aufgenommen und gespeichert werden. Nachteilig wirkt sich jedoch aus, dass für die Erzeugung hyperspektraler Bilder ein hoher Rechenaufwand und für die Speicherung hyperspektraler Bilder ein großer Speicherplatzbedarf besteht. Aufgrund des hohen Rechenaufwands verlängert sich zudem die Zeitdauer bei der Erzeugung hyperspektraler Bilder. Eine Online-Qualitätskontrolle von Dekordrucken auf Trägermaterialien soll hingegen sehr schnell und ohne Verzögerungen des Produktionsprozesses erfolgen. Die Anschaffung mehrerer oder zahlreicher Hyperspektralscanner für die In-Prozesskontrolle von Dekordrucken wäre außerdem sehr teuer und unrentabel. Somit ist die Verwendung hyperspektraler Bilder für die Online-Qualitätskontrolle von Dekordrucken auf Trägermaterialien ungeeignet.

Die Aufgabe der Erfindung besteht deshalb darin, ein Verfahren für die Online-Qualitätskontrolle von Dekordrucken auf Trägermaterialien bereitzustellen, das einfach, sehr schnell und rentabel ist und mit dem somit die Nachteile des Standes überwunden werden können.

Die Aufgabe der Erfindung wird gelöst durch ein Verfahren zur Online-Qualitätskontrolle von Dekordrucken auf Trägermaterialien gemäß Anspruch 1 und eine Vorrichtung gemäß Anspruch 12.

Insbesondere stellt die Erfindung ein Verfahren zur Online-Qualitätskontrolle von Dekordrucken auf Trägermaterialien mit den Merkmalen von Anspruch 1 bereit.

Das Erzeugen eines hyperspektralen digitalen Bildes eines Druckdekors kann mittels eines hyperspektralen Systems, wie beispielsweise mit einer Hyperspektralkamera oder vorzugsweise mittels eines Hyperspektralscanners erfolgen. Im Stand der Technik ist ein entsprechendes Verfahren zur Erzeugung hyperspektraler Bilder als ACMS® (Advanced Colour Measurement System) bekannt. Hyperspektrale Systeme verfügen über eine Vielzahl von Detektoren. Als Ergebnis der Aufzeichnung entsteht ein hyperspektraler Datenwürfel mit zwei räumlichen und einer spektralen Dimension. Zur Erzeugung dieses hyperspektralen Datenwürfels stehen vier grundlegende Techniken zur Verfügung. Mit einem so genannten Schnappschuss wird der gesamte Datensatz mit einem einzigen Detektor-Output geliefert. Beim räumlichen Scannen liefert jeder Detektor-Output das Spektrum von einem schmalen Streifen der Vorlage. Beim spektralen Scannen liefert jeder Detektor-Output eine monochromatische, räumliche Karte der Vorlage. Beim räumlich-spektralen Scannen liefert jeder Detektor-Output eine spektral kodierte, räumliche Karte der Vorlage. Egal welches Verfahren beim Erzeugen des hyperspektralen Bildes gemäß der Erfindung zum Einsatz kommt, aus der vorherigen Darstellung wird klar, dass beim Erzeugen eines hyperspektralen Datenwürfels riesige Datenmengen erzeugt werden. Dies wirkt sich nachteilig auf die Verwendung dieser riesigen Datenmengen in der Online-Qualitätskontrolle von Dekordrucken auf Trägermaterialien aus. Ziel der Erfindung ist es deshalb, eine Vorlage des gedruckten Dekors bereitzustellen, mit dem im Rahmen der Online- Qualitätskontrolle ein einfacher Ähnlichkeitsvergleich bestimmter Eigenschaften, wie zum Beispiel der Farben des in der Produktion auf die Trägermaterialien gedruckten Dekors, durchgeführt werden kann.

Es hat sich als vorteilhaft erwiesen, wenn diese Vorlage, die als Grundlage für den Ähnlichkeitsvergleich im Rahmen der Online-Qualitätskontrolle von gedruckten Dekoren auf Trägermaterialien genutzt wird, aus mehreren Originalen gebildet und gemäß Schritt b) des erfindungsgemäßen Verfahrens durch Kalibrierung normiert wird. Kalibrierung im Sinne der Erfindung bedeutet, dass aus mindestens einem, vorzugsweise mehreren, mehr bevorzugt 2, 3, 4 oder 5, insbesondere bevorzugt 3 hyperspektralen digitalen Bildern eines oder mehrerer Originale des Druckdekors über einen Ähnlichkeitsvergleich eine Art hyperspektrales digitales "Durchschnittsbild", beispielsweise mit durchschnittlichen Farbwerten erzeugt wird oder durchschnittliche numerische Farbwerte ermittelt werden, die als sogenannter "Ähnlichkeits-Index" bereitgestellt werden können. Die Kalibrierung gemäß Schritt b) des erfindungsgemäßen Verfahrens kann beispielsweise mittels eines Ähnlichkeitsvergleichs von zwei Bildern wie in der WO 2008034156 A1 beschreiben, durchgeführt werden. Hiernach ist der Ähnlichkeitsvergleich von hyperspektralen digitalen Bildern dadurch gekennzeichnet, dass

- hyperspektrale Bilder des Druckdekors in Form eines Bildsatzes mit einer Anzahl von jeweils korrespondierenden Bildern vorliegen bzw. bereitgestellt werden,
- aus den Bildern der Bildsätze idente bzw. deckungsgleiche Bildbereiche ausgewählt werden bzw. diese Bilder idente bzw. deckungsgleiche Bildbereiche darstellen,
- für jeden Bildbereich dieser Bildsätze mittels eines Computerprogramms die statistische Verteilung der Intensitäten der einzelnen Pixel und/oder von vorgegebenen Pixelbereichen ermittelt wird,
- die Ähnlichkeit der jeweils für idente bzw. deckungsgleiche Bildbereiche von korrespondierenden Bildern der Bildsätze erhaltenen statistischen Verteilungen der Intensitäten mit statistischen Methoden, insbesondere mit einer Ähnlichkeitsfunktion, überprüft wird,
- das Ausmaß der Ähnlichkeit dieser beiden statistischen Verteilungen der Intensitäten als Maß für die Ähnlichkeit der beiden korrespondierenden Bilder und/oder als Maß für die Ähnlichkeit der beiden Bilder herangezogen wird; und
- Sollwerte für die Farbwerte des Druckdekors festgelegt werden.

Weitere Einzelheiten dieses Verfahrens zum Ähnlichkeitsvergleich sind in der WO 2008034156 A1 beschrieben und dem Fachmann bekannt.

Alternativ kann die Kalibrierung gemäß Schritt b) des erfindungsgemäßen Verfahrens mittels eines Ähnlichkeitsvergleichs der hyperspektralen digitalen Vorlagebilder wie in der WO 2008080185 A2 beschrieben erfolgen. Hiernach umfasst der Ähnlichkeitsvergleich der hyperspektralen digitalen Bilder gemäß Schritt b) des erfindungsgemäßen Verfahrens den Ähnlichkeitsvergleich von zwei hyperspektralen digitalen Bildern des Druckdekors, insbesondere eines Ist-Bildes und eines Sollbildes, wobei für den Vergleich aus den beiden hyperspektralen digitalen Bildern idente bzw. deckungsgleiche Bereiche ausgewählt werden oder die beiden hyperspektralen digitalen Bildern idente bzw. deckungsgleiche Bildbereiche darstellen, dadurch gekennzeichnet, dass

- jedes der beiden hyperspektralen digitalen Bilder, insbesondere das Istbild und das Sollbild, einen Bildsatz von zumindest zwei Bildern, vorzugsweise von einer Vielzahl von Bildern (1, 2, 3... ; 1', 2', 3', .....)umfasst,
- für jeden der beiden Bildsätze die Intensitätswerte, insbesondere Grauwerte oder Farbwerte, für jeden Bildpunkt des Bildbereiches der einzelnen Bilder (1, 2, 3 ... ; 1', 2', 3', .....) in Form eines Vektors $(v,v')$ dargestellt werden,
- aus jedem Vektorpaar $(v,v')$ von korrespondierenden Bildpunkten $(x_i, y_i, x_i', y_i')$ ein Wertepaar $(L, L')$ bestehend aus den Längen $L$ und $L'$ der Vektoren $v$ und $v'$ ermittelt und diese Werte gegeneinander in einem Diagramm aufgetragen bzw. diese Wertepaare als Punkte in einem Diagramm bzw. als Punktwolke dargestellt werden,
- für jedes Vektorpaar $(v,v')$ der Differenzwinkel $(\theta)$ des Vektors $v$ und der Differenzwinkel $(\theta')$ des Vektors $v'$ jeweils gegenüber einem Referenzvektor $(v_{ref})$ ermittelt werden, aus diesen Winkeln $\theta$ und $\theta'$ eine Wertepaar $(\theta,\theta')$ gebildet wird und diese Werte gegeneinander in einem Diagramm aufgetragen bzw. diese Wertepaare in einem Diagramm als Punktwolke dargestellt werden,
- durch jede der beiden Punktwolken eine charakteristische Gerade gelegt wird bzw. in jeder der beiden Punktwolken die jeweils enthaltenen Punkte mit einer Geraden gefittet bzw. angenähert werden und
- dass die Steigungen und die Abszissenabschnitte der beiden erhaltenen Geraden, insbesondere in Form eines damit gebildeten Vektors, als Maß für die Beurteilung der Ähnlichkeit der beiden Bilder herangezogen bzw. angesehen werden.

In einer bevorzugten Ausführungsform ist das Verfahren zum Ähnlichkeitsvergleich nach der WO 2008080185 A2 dadurch gekennzeichnet, dass der von den beiden Steigungen $(k_1, k_2)$ und den beiden Abszissenabschnitten $(d_1, d_2)$ gebildete Vektor normiert bzw. mit Standardverfahren normalisiert bzw. die Länge des normierten Vektors ermittelt wird und die erhaltene Zahl als Maß für die Ähnlichkeit der zu vergleichenden Bilder, insbesondere des Ist-Bildes und des Sollbildes, angesehen wird. Weitere Einzelheiten dieses Verfahrens zum Ähnlichkeitsvergleich sind in der WO 2008080185 A2 beschrieben und dem Fachmann bekannt.

Als Ergebnis des Kalibrierungsschrittes b) des erfindungsgemäßen Verfahrens wird ein durchschnittliches hyperspektrales digitales Bild, d.h. das digitale Soll-Bild des Druckdekors erhalten, das auf einem sehr umfangreichen Datensatz beruht und dessen Anzeige, beispielsweise an einem Monitor, eine hohe Rechenleistung und hohe Speicherkapazität der Datenverarbeitungsanlage erfordert, mit deren Hilfe das erfindungsgemäße Verfahren durchgeführt wird. Unter anderem aus diesen Gründen ist es technisch von Nachteil, dieses digitale hyperspektrale Soll-Bild bzw. davon erzeugte numerische Sollwerte des Druckdekors direkt für die Online-Qualitätskontrolle während des Produktionsprozesses von mit Dekoren bedruckten Trägermaterialien zu verwenden.

In einer weiteren Ausführungsform ist das erfindungsgemäße Verfahren deshalb dadurch gekennzeichnet, dass ein digitales Soll-Bild in Verfahrensschritt c) durch Umwandlung eines kalibrierten hyperspektralen Bildes in eine Bilddatei mit einer Auflösung im Bereich von 4 bis 36 Megapixel, vorzugsweise 4 bis 24 Megapixel, besonders bevorzugt im Bereich von 4 bis 12 Megapixel erzeugt wird. Die Umwandlung eines kalibrierten hyperspektralen Bildes in eine Bilddatei mit niedrigerer Auflösung kann beispielsweise mittels eines Computerprogramms oder durch Bedrucken eines Trägermaterials mit dem Druckdekor anhand des digitalen Soll-Bildes und dem nachfolgenden Scannen mittels eines Farbscanners oder Fotografieren des gedruckten Dekors mittels einer Digitalkamera erfolgen. Durch Verfahrensschritt c) wird eine Bilddatei verringerter Auflösung, und somit mit verringertem Speicherplatzbedarf und wesentlich geringerer Rechenleistung bei der Anzeige des entsprechenden Bildes bereitgestellt. Diese Bilddatei bzw. das digitale Bild mit einer Auflösung im Bereich von 4 bis 36 Megapixel ist dadurch besonders für die Verwendung in der Online-Qualitätskontrolle während des Produktionsprozesses von mit Dekoren bedruckten Trägermaterialien geeignet.

Nachfolgend umfasst das erfindungsgemäße Verfahren den Schritt:
d) Erstellen von mindestens einem ersten Druckdekor auf mindestens einem ersten Trägermaterial.

Das Erzeugen des Druckdekors auf einem Trägermaterial kann sowohl im Tiefdruckverfahren als auch mittels Digitaldruck erfolgen. Das erfindungsgemäße Verfahren zur Online-Qualitätskontrolle von Dekordrucken auf Trägermaterialien ist für Druckdekore, die mittels Tiefdruckverfahren oder mittels Digitaldruck erzeugt worden sind, gleichermaßen geeignet.

Von diesem mittels Tiefdruckverfahren oder mittels Digitaldruck erzeugten Druckdekor auf dem Trägermaterial wird erfindungsgemäß anschließend gemäß Schritt e) mindestens ein digitales Ist-Bild, vorzugsweise eine Vielzahl von digitalen Ist-Bildern des gedruckten Dekors auf dem mindestens einem ersten Trägermaterial mit einer Auflösung im Bereich von 4 bis 36 Megapixel, vorzugsweise 4 bis 24 Megapixel, besonders bevorzugt im Bereich von 4 bis 12 Megapixel, erzeugt und gespeichert. Die Auflösung des digitalen Ist-Bildes entspricht in einer besonders bevorzugten Ausführungsform immer genau der Auflösung des digitalen Soll-Bildes, um die Vergleichbarkeit von Soll-Bild und Ist-Bild zu gewährleisten. Die Erzeugung der digitalen Ist-Bilder kann mit jedem gängigen Digitalisierungsmittel, wie beispielsweise einem Farbscanner oder einer Digitalkamera erfolgen. Bevorzugt ist, wenn das digitale Ist-Bild in Form einer Digitalfotografie erzeugt und gespeichert wird.

In einer bevorzugten Ausführungsform der Erfindung erfolgt das Erzeugen der Digitalfotografien gemäß den Verfahrensschritten c) und e) unter gleichwertigen Bedingungen, insbesondere unter Ausschluss von sich verändernden äußeren Lichteinflüssen und mit identischer Auflösung im Bereich von 4 bis 36 Megapixel, vorzugsweise 4 bis 24 Megapixel, besonders bevorzugt im Bereich von 4 bis 12 Megapixel. Zweckmäßig ist auch die Verwendung des gleichen Digitalisierungsmittels bei der Erzeugung des digitalen Soll-Bildes und der digitalen Ist-Bilder. Dadurch kann sichergestellt werden, dass bei der nachfolgend durchgeführten Ermittlung von Farbabweichungen zwischen dem digitalen Soll-Bild und dem digitalen Ist-Bild durch ein Computerprogramm in Verfahrensschritt f) die Farbabweichungen nicht auf äußere Einflüsse zurückzuführen sind, sondern auf Variationen von Eigenschaften des Trägermaterials, wie beispielsweise Farbigkeit, Benetzbarkeit mit den Drucktinten oder Ähnliches oder auf Schwankungen bei der Ausführung des Dekordrucks, wie zum Beispiel Variationen der Druckfarben, insbesondere bei Chargenwechsel, oder Schwankungen in der Auftragsmenge der Drucktinten, zurückgeführt werden können. Dabei handelt es sich um Parameter, die während des Produktionsprozesses gesteuert und nachreguliert werden können.

Wenn in Verfahrensschritt f) Farbabweichungen zwischen dem digitalen Soll-Bild und dem digitalen Ist-Bild festgestellt werden, so werden diese Daten gemäß Verfahrensschritt g) zur Drucksteuerung, d.h. dazu genutzt, das Bedrucken mindestens einer Seite weiterer Trägermaterialien unter Ausbildung einer Dekorschicht derart durchzuführen, dass Farbabweichungen zwischen dem digitalen Soll-Bild und digitalen Ist-Bildern der gedruckten Dekore auf den weiteren Trägermaterialien nur unterhalb eines vorgegebenen Sollwertes auftreten. Der Sollwert für mögliche Farbabweichungen kann je nach Anforderungen individuell festgelegt werden und wird insbesondere so festgelegt, dass die Produktion von Ausschuss minimiert oder vermieden werden kann. Besonders bevorzugt ist es, wenn eine automatische Anpassung eines oder mehrerer Farbwerte des L*a*b* - Farbraums und/oder des L*C*h° - Farbraums bei der Erzeugung des Druckdekors auf den Trägermaterialien vorgenommen wird, derart, dass Farbabweichungen zwischen dem digitalen Soll-Bild und digitalen Ist-Bildern der gedruckten Dekore auf weiteren Trägermaterialien nur unterhalb eines vorgegebenen Sollwertes auftreten. Alternativ, anstelle der automatischen Drucksteuerung, kann ein Warnsignal an das Bedienpersonal einer Druckstraße für Trägermaterialien ausgegeben werden, wodurch das Bedienpersonal in die Lage versetzt wird, manuell in den Druckprozess einzugreifen und manuell einen oder mehrerer Farbwerte des L*a*b* - Farbraums und/oder des L*C*h° - Farbraums bei der Erzeugung des Druckdekors auf den Trägermaterialien anzupassen bzw. ggf. bei Farbabweichungen, die außerhalb eines vorgegebenen Toleranzbereiches liegen, den Produktionsprozess zu stoppen. Das Warnsignal kann entweder akustisch als Warnton oder visuell in Form einer farbigen Warnleuchte, Warnlampe oder Anzeige auf dem Monitor eines Prozessrechners oder einer Datenverarbeitungsanlage erfolgen, die den Druck der Dekore auf die Trägermaterialien steuert.

Das erfindungsgemäße Verfahren ist besonders vorteilhaft, wenn während der Produktion einer Charge von Trägermaterialien unter Ausbildung einer Dekorschicht das Erzeugen von digitalen Ist-Bildern kontinuierlich erfolgt und wenn die Verfahrensschritte f) und g) kontinuierlich wiederholt werden. Dadurch wird in geeigneter Weise ermöglicht, ganze Chargen und auch Chargen-übergreifend gedruckte Dekore auf Trägermaterialien zu erzeugen, deren Farbanmutung nur oberhalb eines vorgegebenen Sollwertes bzw. innerhalb eines vorgegebenen Toleranzbereichs variiert, wobei die Produktion von Ausschuss minimiert oder vermieden wird.

In einer bevorzugten Ausführungsform des erfindungsgemäßen Verfahrens werden bei der Farbmessung die L*, a* und b*-Werte im sogenannten L*a*b*-Farbraum ermittelt. Der L*a*b*-Farbraum ist ein Farbraum, der den Bereich der wahrnehmbaren Farben abdeckt. Der L*a*b*-Farbraum wird durch ein dreidimensionales Koordinatensystem beschrieben. Die L*-Achse beschreibt die Helligkeit (Luminanz) der Farbe mit Werten von 0 (Schwarz) bis 100 (Weiß). Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen. Die Skalen der a*-Achse und der b*-Achse umfassen einen Zahlenbereich von -150 bis +100 und -100 bis +150.

In dem erfindungsgemäßen Verfahren ist der Wert für die Helligkeit L* dekorabhängig, d.h. ist für jedes Dekor spezifisch zu ermitteln und kann beispielsweise >10, >20, >30, >40, >50, >60, >70, >80 oder >90 sein.

In dem erfindungsgemäßen Verfahren liegen die Werte für a* und/oder b*, die ebenfalls dekorabhängig sind, beispielsweise in einem Bereich zwischen -100 und +100, -80 und +80, - 60 und +60, -40 und +40 oder -20 und +20. Vorzugsweise liegen die Werte für a* und/oder b* in einem Bereich zwischen -10 und +10. In einer bevorzugten Ausführungsform liegen die Werte für a* und/oder b* in einem Bereich zwischen -5 und +5. In einer besonders bevorzugten Ausführungsform der Erfindung sind die Werte für a* und/oder b* nahe null.

Die Farbmessung des digitalen Soll-Bildes und des digitalen Ist-Bildes kann mittels eines Computerprogramms, das auf einer Datenverarbeitungsanlage für die Drucksteuerung gespeichert ist, erfolgen. Das digitale Soll-Bild ist vorzugsweise im Speicher der Datenverarbeitungsanlage hinterlegt. Die digitalen Ist-Bilder, die vorzugsweise kontinuierlich erzeugt werden, werden kontinuierlich mit dem digitalen Soll-Bild verglichen. Anschließend erfolgt die Profilierung der Farbdaten aufgrund der ermittelten Farbabweichungen durch Verarbeitung der bei der kontinuierlichen Messung ermittelten L\*, a\* und b\*-Werte mit einem Computerprogramm. Als Computerprogramm kommt vorzugsweise eine sogenannte RIP Software zum Einsatz.

In einer alternativen bevorzugten Ausführungsform des erfindungsgemäßen Verfahrens werden bei der Farbmessung die L\*, C\* und h°-Werte im sogenannten L\*C\*h°-Farbraum ermittelt.

Beim L\*C\*h°-Farbraum handelt es sich um den Der L\*a\*b\*-Farbraum, wobei anstelle der kartesischen Koordinaten a\*, b\* die Zylinderkoordinaten C\* (Buntheit, relative Farbsättigung, Entfernung von der L-Achse, englisch *chroma*) und h° (Bunttonwinkel, Winkel des Farbtons im L\*a\*b\*-Farbkreis, engl. *hue angle*) angegeben werden. Die L\*a\*b\*-Helligkeit L\* (engl. *lightness*) bleibt dabei unverändert.

Die Umrechnung von a\* und b\* in C\* und h° erfolgt nach folgenden Formeln:

$$C_{ab}^* = \sqrt{a^{*2} + b^{*2}}, \qquad h_{ab}^\circ = \arctan\left(\frac{b^*}{a^*}\right)$$

Umgekehrt lassen sich die Polarkoordinaten in die kartesischen Koordinaten umwandeln:

$$a^* = C_{ab}^* \cdot \cos(h_{ab}^\circ), \qquad b^* = C_{ab}^* \cdot \sin(h_{ab}^\circ).$$

RIP (raster imaging process) Software ist eine Software zur Berechnung von Farbwerten. In dem erfindungsgemäßen Verfahren wird bei der Anpassung der Farbdaten mittels der RIP Software unter Berücksichtigung der Helligkeit und/oder Farbe des Dekors eine Umrechnung der gemessenen Farbwerte in das Standardfarbensystem CYMK für den Digitaldruck vorgenommen.

Anpassung der Farbwerte für den Digitaldruck bedeutet, dass die Anteile der einzelnen Bestandteile des CYMK-Standardfarbensystems verändert werden. Vorzugsweise werden die Anteile der einzelnen Bestandteile des CYMK-Standardfarbensystems so verändert, dass unter Berücksichtigung der ermittelten Helligkeit bzw. der ermittelten Farbabweichungen zwischen dem digitalen Soll-Bild und dem digitalen Ist-Bild (jeweils mit einer Auflösung im Bereich von 4 bis 36 Megapixel, vorzugsweise 4 bis 24 Megapixel, besonders bevorzugt im Bereich von 4 bis 12 Megapixel keine Farbabweichungen zwischen den gedruckten Dekoren der Trägerplatten mindestens einen ersten Charge und/oder jeder weiteren Charge auftreten.

Anstelle des Digitaldrucks kann die Anpassung der Farbwerte alternativ für den Tiefdruck mit mehreren, vorzugsweise 2, 3, 4 oder 5, besonders bevorzugt 3 Druckwalzen verwendet werden. Für jede Druckwalze werden ein oder auch mehr als ein Farbkanal verwendet z.B. zwei oder drei Farbkanäle. Unter Verwendung der mit den zugeordneten Farbinformationen versehenen Druckwalzen wird unter Berücksichtigung der ermittelten Helligkeit bzw. der ermittelten Farbabweichungen zwischen dem digitalen Soll-Bild und dem digitalen Ist-Bild (jeweils mit einer Auflösung im Bereich von 4 bis 36 Megapixel, vorzugsweise 4 bis 24 Megapixel, besonders bevorzugt im Bereich von 4 bis 12 Megapixel ein Dekor im Tiefdruck erzeugt, derart, dass keine Farbabweichungen zwischen den gedruckten Dekoren der Trägerplatten mindestens einen ersten Charge und/oder jeder weiteren Charge auftreten.

Als Druckmotive für den Digitaldruck oder Tiefdruck können typischerweise verschiedene Dekore wie z.B. Holz-, Fliesen-, Fantasiedekore oder Parkettimitate eingesetzt werden.

Sollwerte oder Toleranzbereiche werden entweder für einen oder mehrere Farbwerte des L\*C\*h°-Farbraums und/oder des L\*a\*b\*-Farbraums vorgegeben. Gemäß der Erfindung sollen Abweichungen eines oder mehrerer Farbwerte des L\*C\*h°-Farbraums und/oder des L\*a\*b\*-Farbraums der digitalen Ist-Bilder der gedruckten Dekore von den entsprechenden Farbwerten des digitalen Soll-Bildes nur unterhalb eines vorgegebenen Sollwertes von 30 %, vorzugsweise von 25 %, mehr bevorzugt von 20 %, insbesondere bevorzugt von 15 % auftreten. Alternativ sollen Abweichungen eines oder mehrerer Farbwerte des L\*C\*h°-Farbraums und/oder des L\*a\*b\*-Farbraums der digitalen Ist-Bilder der gedruckten Dekore von den entsprechenden Farbwerten des digitalen Soll-Bildes nur innerhalb eines vorgegebenen Toleranzbereiches von ± 20 %, vorzugsweise von ± 15 %, mehr bevorzugt von ± 10 %, insbesondere bevorzugt von ± 5 % auftreten.

Der Digitaldruck zum Bedrucken mindestens einer Seite einer Holzwerkstoffplatte kann unter Verwendung eines Digitaldruckers mit einer wasserbasierten Digitaldrucktinte, einer UV- oder lösungsmittelbasierten Tinte ausgeführt werden. Bevorzugt ist die Verwendung einer wasserbasierten Digitaldrucktinte. Die Menge an verwendeter Digitaldrucktinte kann zwischen 5 und 15 g/m$^2$, bevorzugt 6 und 8 g/m$^2$ betragen.

Um Farbabweichungen zwischen den gedruckten Dekoren einer Charge bzw. auch zwischen identischen gedruckten Dekoren verschiedener Chargen von vornherein so gering wie möglich zu halten, hat es sich als zweckmäßig erwiesen, wenn das mittels Digitaldruck erstellte Druckdekor oder das mittels Tiefdruck unter Verwendung von Druckwalzen erstellte Druckdekor auf einheitlich vorgrundierte Trägermaterialien aufgedruckt wird.

Zur Herstellung von einheitlich vorgrundierten Trägermaterialien, insbesondere von Holzwerkstoffplatten wird in einer Ausführungsform des vorliegenden Verfahrens auf die zu bedruckende Seite der Holzwerkstoffplatte vor dem Bedrucken mit einem Dekor mindestens eine Grundierungsschicht umfassend mindestens ein Harz und/oder mindestens einen Lack aufgetragen, die anschließend angetrocknet und/oder angehärtet wird.

Vorzugsweise wird die zu bedruckende Seite der Holzwerkstoffplatte vor dem Auftragen der Grundierung angeschliffen.

Zur Grundierung kann eine wässrige Harzlösung und/oder eine strahlenhärtbare Spachtelmasse auf die zu bedruckende Seite des Trägermaterials aufgetragen werden. Als Grundierungsmittel sind z.B. wässrige Harzlösungen wie Melamin-Formaldehyd-Harz, Harnstoff-Formaldehyd-Harz oder Melamin-Harnstoff-Formaldehyd-Harz einsetzbar. Es ist ebenfalls möglich, das Trägermaterial mit 1K/2K-Acrylat-, UV- und/oder ESH-Spachtel vorzubeschichten bzw. zu grundieren und anschließend diese Grundierungsschicht entsprechend auszuhärten.

Vorzugsweise wird für die Vorbeschichtung bzw. Grundierung der Holzwerkstoffplatte eine wässrige Harzlösung verwendet, die eine wässrige Harzlösung, insbesondere eine wässrige Lösung eines Melamin-Formaldehyd-Harzes, Harnstoff-Formaldehyd-Harzes oder Melamin-Harnstoff-Formaldehyd-Harz.

Die Auftragsmenge an flüssiger Harzlösung zur Grundierung kann zwischen 10 und 80 g/m$^2$, bevorzugt 20 und 50 g/m$^2$ betragen. Der Feststoffgehalt der wässrigen Harzlösung liegt zwischen 30 und 80%, bevorzugt 40 und 60%, insbesondere bevorzugt bei 55%. Das Flüssigharz kann zusätzlich geeignete Netzmittel, Härter, Trennmittel und Entschäumer aufweisen.

Nach Auftragen der wässrigen Harzlösung auf die Holzwerkstoffplatte zur Vorbeschichtung bzw. Grundierung derselbigen wird das Flüssigharz auf eine Feuchte von 10%, bevorzugt 6% z.B. in einem Konvektionsofen oder Nahinfrarot-Ofen getrocknet.

In einer anderen Ausführungsform des vorliegenden Verfahrens kann die Holzwerkstoffplatte mit 1K/2K-Acrylat-, und/oder ESH-Spachtel vorbeschichtet bzw. grundiert werden. Eine UV-Spachtelmasse besteht vorteilhafterweise im Wesentlichen aus UV-härtbaren Lackkomponenten, Pigmenten, Reaktivverdünner und Radikalbildnern als Kettenstarter.

Die Auftragsmenge der Spachtelmasse kann in diesem Fall 50 bis 150 g/m$^2$, bevorzugt 50 bis 100 g/m$^2$ betragen. Die Mengenangaben beziehen sich dabei auf eine 100%ige Spachtelmasse.

Ebenfalls ist es möglich, dass die zur Grundierung verwendete Spachtelmasse pigmentiert vorliegt, wodurch das Druckergebnis variiert oder verbessert werden kann.

Besonders bevorzugt gemäß der Erfindung ist die Vorbeschichtung der Holzwerkstoffplatte mit einer transparenten Grundierung.

In einer weiteren Ausführungsform des vorliegenden Verfahrens wird vor dem Bedrucken der mindestens einen Seite der Holzwerkstoffplatte mindestens eine Schicht einer pigmentierten Grundierung, die vorzugsweise wasserbasiert ist, auf die zu bedruckende Seite der Holzwerkstoffplatte aufgetragen. Die pigmentierte Grundierung kann entweder direkt auf die unbehandelte Oberfläche der Werkstoffplatte oder auch auf die vorherige, vorzugsweise transparente Grundierung aufgetragen werden.

Die wasserbasierte pigmentierte Grundierung kann auch in mehr als einer Schicht aufgetragen werden (z.B. 3 bis 10 Schichten, bevorzugt 5 bis 8 Schichten, besonders bevorzugt 7 Schichten), wobei nach jedem Schichtauftrag die pigmentierte Grundierung z.B. in einem Konvektionstrockner oder einem Nahinfrarot-Trockner getrocknet wird. Die wasserbasierte pigmentierte Grundierung enthält vorzugsweise mindestens ein Pigment einer hellen Farbe, besonders bevorzugt mindestens ein Weißpigment.

Weißpigmente sind unbunte anorganische Pigmente mit einem hohen Brechungsindex (größer als 1,8), die vor allem zur Erzeugung von optischer Weiße in Anstrichmitteln oder als Füllstoff in z. B. Kunststoffen verwendet werden. Weißpigmente gemäß der Erfindung können ausgewählt sein aus der Gruppe umfassend Titandioxid, Lithopone, Bariumsulfat, Zinkoxid, Zinksulfid und Calciumsulfat. Lithopone ist ein Weißpigment, das Bariumsulfat und Zinksulfid beinhaltet. Gemäß der Erfindung wird vorzugsweise Titandioxid als Weißpigment in der wasserbasierten pigmentierten Grundierung eingesetzt, da Titandioxid den höchsten Brechungsindex und somit die höchste Deckkraft unter den bekannten Weißpigmenten aufweist.

Es ist ebenfalls möglich, auf das Druckdekor bzw. die Druckdekore mindestens eine Schutzschicht, vorzugsweise zwei oder drei Schichten umfassend abriebfeste Partikel, natürliche Fasern, synthetische Fasern und/oder weitere Additive aufzutragen, wobei Harze wie Melamin-Formaldehyd-Harz, Harnstoff-Formaldehyd-Harz, Acrylatharze und Polyurethanharze als geeignete Bindemittel zum Einsatz kommen können.

Die abriebfesten Partikel sind bevorzugt ausgewählt aus der Gruppe enthaltend Aluminiumoxide, Korund, Borcabide, Siliciumdioxide, Siliciumcarbide und Glaskugeln. Als natürliche und/oder synthetische Fasern, insbesondere Fasern ausgewählt aus der Gruppe enthaltend Holzfasern, Zellulosefasern, Wollfasern, Hanffasern und organische oder anorganische Polymerfasern zum Einsatz.

Als Additive können leitfähige Substanzen, Flammschutzmittel, luminiszierende Stoffe und Metalle zugegeben werden. Dabei können die leitfähigen Substanzen ausgewählt sein aus der Gruppe enthaltend Ruß, Kohlefasern, Metallpulver und Nanopartikel, insbesondere Kohlenstoffnanoröhren. Es können auch Kombinationen dieser Substanzen zum Einsatz kommen. Als Flammschutzmittel werden bevorzugt Phosphate, Borate, insbesondere Ammoniumpolyphosphat, Tris(tri-bromneopentyl)phosphat, Zinkborat oder Borsäurekomplexe von mehrwertigen Alkoholen verwendet. Als luminiszierende Stoffe werden bevorzugt fluoreszierende und/oder phosphoreszierende Stoffe auf anorganischer oder organischer Basis, insbesondere Zinksulfit und Erdalkalialuminate verwendet.

In einer weiteren Ausführungsform des vorliegenden Verfahrens wird das bedruckte und gegebenenfalls mit einer Schutzschicht, insbesondere aus Formaldehydharzen, versehene Trägermaterial in einer Kurztakt (KT)-Presse weiter bearbeitet bzw. veredelt. In der KT-Presse werden die Harzschichten aufgeschmolzen und der Schichtverbund zu einem Laminat ausgehärtet. Während der Weiterverarbeitung in der KT-Presse können unter Verwendung eines strukturierten Pressbleches auch Oberflächenstrukturen in der Oberfläche des Trägermaterials wie einer Holzwerkstoffplatte erzeugt werden, die optional auf das Dekor abgestimmt ausgeführt sein können (so genannte dekorsynchrone Struktur). Bei Holzdekoren können die Strukturen in Form von Porenstrukturen vorliegen, die der Maserung folgen. Bei vielen Dekoren können die Strukturen Vertiefungen im Bereich von dem Dekor umfasster Fugen Füllungslinien sein.

Das vorliegende Verfahren wird in einer Vorrichtung zur Online-Qualitätskontrolle von Dekordrucken auf Trägermaterialien mit den Merkmalen von Anspruch 12 durchgeführt.

Die zuvor beschriebenen Vorteile und vorteilhaften Ausführungsformen für das erfindungsgemäße Verfahren gelten gleichermaßen für die erfindungsgemäße Vorrichtung, so dass auf das zuvor Genannte Bezug genommen wird.

Wie erwähnt handelt es sich bei dem Mittel zum Erzeugen eines hyperspektralen digitalen Bildes eines Druckdekors vorzugsweise um einen Hyperspektralscanner.

In einer weitergehenden Variante umfasst die erfindungsgemäße Vorrichtung mindestens ein Mittel zum Aufbringen einer Schutzschicht auf das mit dem jeweiligen Druck dekorversehene Trägermaterial. Dieses Mittel bzw. diese Vorrichtung zum Aufbringen einer Schutzschicht ist vorzugsweise im Anschluss an die Druckstraße angeordnet.

In einer bevorzugten Ausführungsform weist die erfindungsgemäße Vorrichtung mindestens eine Kurztaktpresse zum Verpressen des mit dem Druckdekors versehene Trägermaterials und der darauf angeordneten Schutzschicht auf.

Die Erfindung wird nachfolgend unter Bezugnahme auf die Figur anhand eines Ausführungsbeispiels näher erläutert. Es zeigen:

Figur 1:     den Stand der Technik der Qualitätskontrolle von gedruckten Dekoren auf Basis von hyperspektralen Scans; und

Figur 2:     die Online- Online-Qualitätskontrolle von Dekordrucken auf Trägermaterialien gemäß der Erfindung.

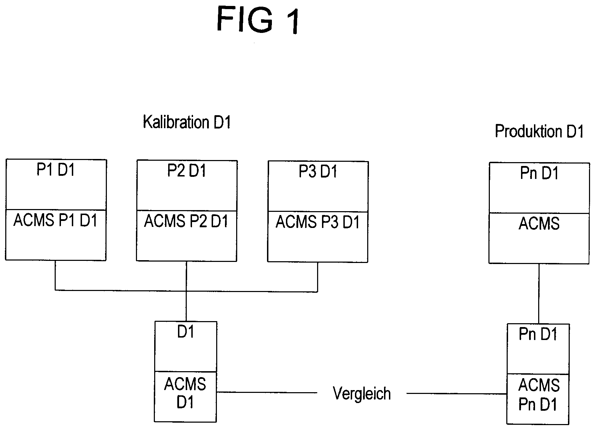

Im Stand der Technik, wie in Figur 1 dargestellt, umfasst die Kalibrierung eines Druckdekors (D1), bei der Bilder von mehreren Trägermaterialien, die mit dem gleichen Druckdekor (D1) bedruckt und somit produziert (P1, P2, P3) worden sind, die Erzeugung von hyperspektralen digitalen Bildern mittels ACMS® (Advanced Colour Measurement System) (ACMS P1 D1; ACMS P2 D1, ACMS P3 D1). Die Erzeugung hyperspektralen digitalen Bildern mittels ACMS (ACMS P1 D1; ACMS P2 D1, ACMS P3 D1) kann beispielsweise mit einem hyperspektralen Echtfarben-Scanner erfolgen, der folgende Eigenschaften aufweist:

| | |
|---|---|
| Xenon Lichtquelle | |
| ASTM/CIE/ISO Farbmessstandards konform | |
| Geometrie: | 45°/0° |
| Messfläche: | 80x220 mm |
| Räumliche Auflösung: | 125 $\mu$m |
| Spektralbereich: | 380 -780 nm |
| Spektrale Auflösung: | 5 nm |

Anhand des erhaltenen hyperspektralen digitalen Bildes ist es möglich, eine Kontrastbewertung und eine Qualitätsbeurteilung mehrfarbiger Oberflächen durchzuführen. Auf Basis eines Ähnlichkeitsvergleichs der hyperspektralen Bilder (ACMS P1 D1; ACMS P2 D1, ACMS P3 D1) werden Ähnlichkeitsfaktoren für einen oder mehrere Farbwerte des Dekors (D1) berechnet. Diese Ähnlichkeitsfaktoren können als standardisiertes Protokoll zwischen Kunde (Produzent des Trägermaterials) und einem Lieferanten (Erzeuger des Dekors) ausgetauscht werden. Die Erstellung eines kalibrierten Dekors mittels hyperspektraler digitaler Bilder nach ACMS (D1 / ACMS D1) ist jedoch teuer und zeitaufwändig und für die Online-Qualitätskontrolle von Produktionschargen (Pn) von Trägermaterialen des Dekors Pn D1) ungeeignet. Nach dieser Methode müssten außerdem kontinuierlich hyperspektrale digitale Bilder von bedruckten Trägermaterialien einer laufenden Produktion (Pn D1 / ACMS) erzeugt und mittels ACMS verarbeitet werden (Pn D1 / ACMS Pn D1), um einen Vergleich mit dem kalibrierten Dekor auf Basis hyperspektraler digitaler Bilder (D1 / ACMS D1) zu ermöglichen.

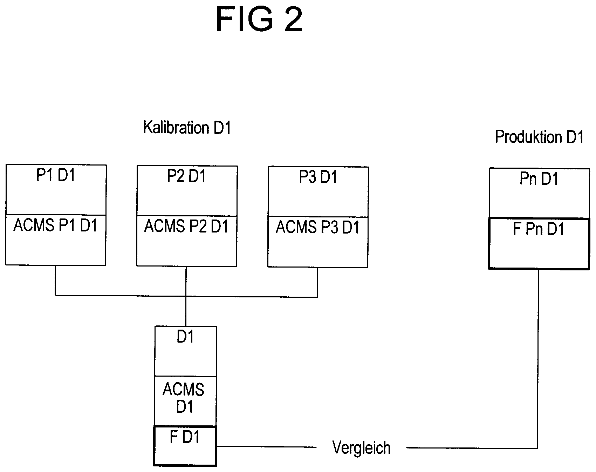

Das erfindungsgemäße Verfahren, wie in Figur 2 dargestellt, ist eine Fortentwicklung des Verfahrens nach Figur 1. Bei der Kalibrierung, erfolgen mehrere Dekordrucke und die jeweilige Erzeugung eines hyperspektralen Bildes mit ACMS. Sofern die dabei erhaltenen Werte den Ähnlichkeitsvorgaben entsprechen, wird dieses Dekor zur weiteren Verarbeitung freigegeben. An die Erstellung des kalibrierten Dekors auf Basis hyperspektraler digitaler Bilder (D1 / ACMS D1) schließt sich die Erzeugung eines digitalen Soll-Bildes (F D1) mit geringerer Auflösung im Bereich von 4 bis 36 Megapixel an. Dieses digitale Soll-Bild wird für das erfindungsgemäße Online-Qualitätskontrollverfahren in einer Datenbank abgelegt und bei jeder weiteren Produktion dieses Dekores zu einem schnellen Vergleich herangezogen. Im vorliegenden Fall wurde das digitale Soll-Bild (F-D1) als Digitalfotografie erzeugt. Von den Produktionschargen (Pn D1) werden in kontinuierlichen Zeitabständen digitale Ist-Bilder (F Pn D1) erzeugt. Die Aufnahme der digitalen Ist-Bilder erfolgt jeweils unter annähernd gleichen Bedingungen, weitgehend abgeschottet von variablen äußeren Lichteinflüssen, wie beispielsweise durch eine nur zum Objekt geöffnete Röhre, in der das Aufnahmegerät und ggf. eine notwendige Beleuchtung platziert sind. Die digitalen Ist-Bilder (F Pn D1) werden gegenüber dem digitalen Soll-Bild (F-D1) kontinuierlich einem Ähnlichkeitsvergleich unterzogen. Hierbei werden beispielsweise ein oder mehrere Farbwerte des L*a*b* - Farbraums und/oder des L*C*h° - Farbraums ermittelt und miteinander verglichen. Bei Überschreiten des vorgegebenen Sollwertes, der für die Farbwerte des L*a*b* - Farbraums beispielsweise 20 % beträgt, durch einen oder mehrere Farbwerte der digitalen Ist-Bilder, kann in die Produktion eingegriffen werden und der Produktionsprozess beeinflusst werden. Dies kann manuell erfolgen. Hierzu wird dem Bediener einer Produktionsanlage über ein Signal angezeigt, wenn entsprechende Abweichungen von Farbwerten auftreten. Dieses Signal kann beispielsweise ein akustisches Signal sein oder ein visuelles Signal in Form von Signalleuchten oder farbigen Anzeigen auf dem Monitor eines Prozessrechners sein. Ein visuelles Signal in der Farbe Grün zeigt beispielsweise an, dass keine Farbabweichungen zwischen dem digitalen Soll-Bild und dem digitalen Ist-Bild gemessen worden sind. Ein visuelles Signal in der Farbe Gelb zeigt Farbabweichungen an. Diese bewegen sich allerdings innerhalb eines vorgegebenen Toleranzbereiches bzw. unterhalb eines vorgegebenen Sollwertes und es ist kein Eingriff in den Positionsprozess erforderlich. Ein visuelles Signal in der Farbe Rot zeigt Farbabweichungen an, die sich außerhalb eines vorgegebenen Toleranzbereiches bzw. oberhalb eines vorgegebenen Sollwertes bewegen. Hier ist ein Eingreifen in den Produktionsprozess durch den Bediener der Produktionsanlage notwendig. Dieser kann beispielsweise die laufende Produktion stoppen oder den Druck für einzelne oder mehrere Farbkanäle so korrigieren, dass Farbabweichungen nur noch innerhalb des vorgegebenen Toleranzbereiches bzw. unterhalb eines vorgegebenen Sollwertes auftreten. Alternativ kann bei festgestellten Farbabweichungen mittels eines Prozessrechners und einer entsprechenden Steuersoftware eine automatische Anpassung des Dekordrucks erfolgen, so dass keine Farbabweichungen mehr auftreten oder diese so gering gehalten werden, dass die Farbabweichungen nur innerhalb eines zulässigen Toleranzbereiches bzw. unterhalb eines vorgegebenen Sollwertes auftreten.

**Ausführungsbeispiel 1 - Analoger Dekor-Direktdruck**

Eine mit einer titandioxidhaltigen Grundierung beschichtete HDF-Platte (8 mm) wurde mittels indirektem Tiefdruck unter Verwendung mehrerer Walzen dekoriert. Als Dekor wurde ein Holzdekor gewählt. Dabei wurde in einem 3-Farbsystem gearbeitet mit 3 Walzenauftragswerken, mit denen nacheinander unterschiedliche Farben aufgetragen werden. Die Farbauftragswalzen waren entsprechend graviert, so dass Farbe in die Gravur aufgenommen, an eine Gummiwalze übergeben und dann auf den Träger aufgedruckt wurden. Nach der Erzeugung des gedruckten Dekors wurde ein digitales Foto (Ist-Bild) mittels einer Digitalkamera in einer Auflösung von 12 Megapixel erzeugt. Die Farbwerte des L*a*b*-Farbraums dieses Ist- Bildes wurden mit den Farbwerten des L*a*b*-Farbraums eines digitalen Soll- Bildes verglichen. Das digitale Soll-Bild war durch zuvor mittels hyperspektraler digitaler Bilder (ACMS) kalibrierten gleichen Dekors und Erzeugung einer digitalen Fotografie davon mit einer Auflösung von 12 Megapixel hergestellt worden. Dieser Vorgang wurde für jede zehnte HDF-Platte einer jeden Produktioncharge wiederholt. Die Aufnahme der digitalen Ist-Bilder erfolgte jeweils unter gleichen Bedingungen durch eine nur zum Objekt geöffnete Röhre, in der die Digitalkamera und eine Beleuchtung platziert waren. Als Sollwert für erlaubte Farbabweichungen wurde 20 % für die einzelnen Werte des L*a*b*-Farbraums festgelegt. Beim Ähnlichkeitsvergleich der Farbwerte des digitalen Soll-Bildes und des digitalen Ist-Bildes wurden nur Abweichungen festgestellt, die unterhalb des vorgegebenen Sollwertes lagen. Ein Eingreifen in den Produktionsprozess war deshalb nicht notwendig und nachfolgende Trägerplatten wurden mit dem gleichen Dekor unter Verwendung der gleichen Druckbedingungen bedruckt.

**Ausführungsbeispiel 2 - Digitaldruck**

Eine Vielzahl mit einer titandioxidhaltigen Grundierung beschichteten HDF-Platten (8 mm) wurde mit einem Digitaldrucker mit einem Holzdekor bedruckt. Der Drucker, der über vier Reihen Druckköpfe verfügte, druckte mit einem modifizierten Farbsatz (rY= rötliches gelb, gY= grünliches gelb, C= rot und K= Key bzw. schwarz). Die Tinten waren wasserbasiert. Von jeder zehnten bedruckten HDF-Platte wurde ein digitales Foto (Ist-Bild) mittels einer Digitalkamera in einer Auflösung von 8 Megapixel erzeugt. Die Farbwerte des L*a*b*-Farbraums dieses Ist-Bildes wurden mit den Farbwerten des L*a*b*-Farbraums eines digitalen Soll- Bildes verglichen. Das digitale Soll-Bild war zuvor durch Kalibrierung hyperspektraler digitaler Bilder des gleichen Dekors mittels ACMS und Erzeugung einer digitalen Fotografie davon mit einer Auflösung von 8 Megapixel hergestellt worden. Die Aufnahme der digitalen Ist-Bilder erfolgte jeweils unter gleichen Bedingungen durch eine nur zum Objekt geöffnete Röhre, in der die Digitalkamera und eine Beleuchtung platziert waren. Als Sollwert für erlaubte Farbabweichungen wurde 15 % für die einzelnen Werte des L*a*b*-Farbraums festgelegt. Beim Ähnlichkeitsvergleich der Farbwerte des digitalen Soll-Bildes und des digitalen Ist-Bildes wurden Abweichungen für die Farbwerte a* und b* von 17 % bzw. 20 % in den digitalen Ist-Bildern festgestellt. Die Farbabweichungen wurden an den Steuercomputer der Druckstraße übermittelt. Mit Hilfe einer RIP-Software auf dem Steuercomputer wurde der Digitaldruck automatisch an die Farbwerte des digitalen Soll-Bildes angepasst. Nach Druckanpassung wurde weiterhin von jeder zehnten bedruckten HDF-Platte ein digitales Foto (Ist-Bild) mittels einer Digitalkamera in einer Auflösung von 8 Megapixel erzeugt. Der erneute Ähnlichkeitsvergleich ergab, dass Farbabweichungen für alle Farbwerte des L*a*b*-Farbraums nunmehr unterhalb des vorgegebenen Sollwertes von 15 % auftraten.

**Ausführungsbeispiel 3 - Finishing**

Die bedruckten HDF-Platten gemäß der Ausführungsbeispiele 1 und 2 werden wie folgt weiterverarbeitet: Die bedruckten HDF-Platten wurden vor der Produktionslinie vereinzelt und mit einer Geschwindigkeit von 28 m/min durch die nachfolgende Produktionsanlage transportiert.

In einem ersten Walzenauftragsaggregat werden ca. 70 g Melaminharz fl. (Feststoffgehalt: 55 Gew%) die üblichen Hilfsstoffe enthaltend (Härter, Netzmittel usw.) auf die Plattenoberfläche aufgetragen. Auf die Plattenunterseite wird ebenfalls mit dem ersten Walzenauftragsaggregat ein Melaminharz aufgetragen (Auftragsmenge: 60 g Harz fl. /m², Feststoffgehalt: ca. 55 Gew%).

Danach werden auf die Oberfläche mit einer Streuapparatur 14 g Korund /m² (F 200) aufgestreut. Durch einen Abstand von ca. 5 m bis zum Trockner wird es dem Korund ermöglicht in das Melaminharz einzusinken. Dann durchläuft die Platte einen Umlufttrockner. Danach wird eine Melamin-Harzschicht (Feststoffgehalt: 55 Gew%) in einer Menge von 25 g/m² aufgetragen. Auch diese enthält die üblichen Hilfsstoffe. Auf die Plattenunterseite wird ebenfalls mit einem Walzenauftragsaggregat ein Melaminharz aufgetragen (Auftragsmenge: 50 g Harz fl. /m², Feststoffgehalt: ca. 55 Gew%). Wieder wird die Platte in einem Umlufttrockner getrocknet.

Danach wird auf die Plattenoberfläche ein Melaminharz aufgetragen, das zusätzlich noch Glaskugeln enthält. Diese haben einen Durchmesser von 60 - 80 μm. Die Auftragsmenge des Harzes liegt bei ca. 20 g Melaminharz fl. / μm² (Feststoffgehalt: 61,5 Gew%). In der Rezeptur ist neben dem Harter und dem Netzmittel auch ein Trennmittel enthalten. Die Auftragsmenge an Glaskugeln liegt bei ca. 3 g/m². Auf die Plattenunterseite wird ebenfalls mit einem Walzenauftragsaggregat ein Melaminharz aufgetragen (Auftragsmenge: 40 g Harz fl. /m², Feststoffgehalt: ca. 55 Gew%). Die Platte wird wiederum in einem Umlufttrockner getrocknet und danach nochmals mit einem Melaminharz beschichtet, das Glaskugeln enthält. Als weitere Komponente ist Zellulose (Vivapur 302) enthalten. Es werden wiederum ca. 20 g Melaminharz fl. / μm² (Feststoffgehalt: 61,6 Gew%) aufgetragen. Dabei werden wieder ca. 3 g Glaskugeln und 0,25 g Zellulose / μm² aufgetragen. In den Rezepturen ist neben dem Harter und dem Netzmittel auch ein Trennmittel enthalten. Auf die Plattenunterseite wird ebenfalls mit einem Walzenauftragsaggregat ein Melaminharz aufgetragen (Auftragsmenge: 30 g Harz fl. /m², Feststoffgehalt: ca. 55 Gew%). Das Harz wird wiederum in einem Umlufttrockner getrocknet und danach wird die Platte in einer Kurztaktpresse bei 200°C und einem Druck von 400 N/cm² verpresst. Die Presszeit betrug 10 Sekunden. Als Strukturgeber wurde ein Pressblech mit einer Holzstruktur verwendet.

**Patentansprüche**

1. Verfahren zur Online-Qualitätskontrolle von Dekordrucken auf Trägermaterialien, umfassend den Ähnlichkeitsvergleich von einem Ist-Bild und einem Soll-Bild der Druckdekore und das Anpassen des Dekordrucks bei Feststellung von Abweichungen der Farbwerte des Ist-Bildes von den Farbwerten des Soll-Bildes während der Produktion einer Charge von Trägermaterialien mit einer Dekorschicht, wobei

   a) mindestens ein hyperspektrales digitales Bild eines Druckdekors erzeugt wird;

b) das Druckdekor mittels des mindestens einen hyperspektralen digitalen Bildes kalibriert wird indem ein durchschnittliches hyperspektrales digitales Bild des Druckdekors erzeugt wird, dessen Anzeige eine hohe Rechenleistung und eine hohe Speicherkapazität erfordert;

**dadurch gekennzeichnet, dass** das Verfahren weiterhin die Schritte umfasst:

c) Erzeugung und Speichern eines digitalen Soll-Bildes des Druckdekors durch Umwandlung des durchschnittlichen hyperspektralen digitalen Bildes des Druckdekors in eine Bilddatei im L*a*b oder L*C*h Farbraum mit einer Auflösung im Bereich von 4 bis 36 Megapixel;
d) Erstellen von mindestens einem ersten Druckdekor auf mindestens einem ersten Trägermaterial;
e) Erzeugung und Speichern mindestens eines digitalen Ist-Bildes des gedruckten Dekors auf dem mindestens einem ersten Trägermaterial mit einer Auflösung im Bereich von 4 bis 36 Megapixel, mittels Farbscanner oder einer Digitalkamera;
f) Ermittlung von Farbabweichungen für einen oder mehrere Farbwerte des L*a*b*-Farbraums und/oder des L*C*h° - Farbraums zwischen dem digitalen Soll-Bild und dem digitalen Ist-Bild durch ein Computerprogramm;
g) Bedrucken mindestens einer Seite weiterer Trägermaterialien unter Ausbildung einer Dekorschicht derart, dass Farbabweichungen zwischen dem digitalen Soll-Bild und digitalen Ist-Bildern der gedruckten Dekore auf den weiteren Trägermaterialien nur unterhalb eines vorgegebenen Sollwertes bzw. nur innerhalb eines vorgegebenen Toleranzbereiches auftreten.

2. Verfahren nach Anspruch 1, **dadurch gekennzeichnet, dass** die Erzeugung eines hyperspektralen digitalen Bildes eines Druckdekors mittels eines Hyperspektralscanners erfolgt.

3. Verfahren nach einem der vorherigen Ansprüche, **dadurch gekennzeichnet, dass** das digitale Soll-Bild in Verfahrensschritt c) durch Umwandlung eines kalibrierten hyperspektralen Bildes in eine Bilddatei mit einer Auflösung im Bereich von 4 bis 36 Megapixel mittels eines Computerprogramms oder durch Bedrucken eines Trägermaterials mit dem Druckdekor und dem nachfolgenden Scannen mittels eines Farbscanners oder Fotografieren des gedruckten Dekors mittels einer Digitalkamera erzeugt wird.

4. Verfahren nach einem der vorherigen Ansprüche, **dadurch gekennzeichnet, dass** das Erzeugen der Digitalfotografien gemäß den Verfahrensschritten c) und e) unter gleichwertigen Bedingungen erfolgt, insbesondere unter Ausschluss von sich verändernden äußeren Lichteinflüssen und mit identischer Auflösung im Bereich von 4 bis 36 Megapixel.

5. Verfahren nach einem der vorherigen Ansprüche, **dadurch gekennzeichnet, dass** während der Produktion einer Charge von Trägermaterialien unter Ausbildung einer Dekorschicht das Erzeugen von digitalen Ist-Bildern kontinuierlich erfolgt und dass die Verfahrensschritte f) und g) kontinuierlich wiederholt werden.

6. Verfahren nach einem der vorherigen Ansprüche, **dadurch gekennzeichnet, dass** das Bedrucken des Trägermaterials gemäß den Verfahrensschritten d) und/oder g) mittels Tiefdruck oder digitalem Direktdruck erfolgt.

7. Verfahren nach einem der vorherigen Ansprüche, **dadurch gekennzeichnet, dass**, wenn in Verfahrensschritt f) Farbabweichungen festgestellt werden,

- ein Warnsignal an das Bedienpersonal einer Druckstraße für Trägermaterialien ausgegeben wird, oder
- eine automatische Anpassung eines oder mehrerer Farbwerte des L*a*b* - Farbraums und/oder des L*C*h°
- Farbraums bei der Erzeugung des Druckdekors auf den Trägermaterialien vorgenommen wird, derart, dass Farbabweichungen zwischen dem digitalen Soll-Bild und digitalen Ist-Bildern der gedruckten Dekore auf weiteren Trägermaterialien nur unterhalb eines vorgegebenen Sollwertes bzw. nur innerhalb eines vorgegebenen Toleranzbereiches auftreten.

8. Verfahren nach einem der vorherigen Ansprüche, **dadurch gekennzeichnet, dass** das Trägermaterial ausgewählt ist aus einer Gruppe enthaltend Papier, Glas, Metall, Folien, Holzwerkstoffe, insbesondere MDF- oder HDF-Platten, WPC-Platten, Furniere, Lackschichten, Kunststoffplatten und anorganische Trägerplatten.

9. Verfahren nach einem der vorherigen Ansprüche, **dadurch gekennzeichnet, dass** das mittels Digitaldruck erstellte Druckdekor oder das mittels Tiefdruck unter Verwendung von Druckwalzen erstellte Druckdekor auf einheitlich vorgrundierte Trägermaterialien aufgedruckt ist.

**10.** Verfahren nach einem der vorherigen Ansprüche, **dadurch gekennzeichnet, dass** auf das Druckdekor bzw. die Druckdekore eine Schutzschicht aufgetragen wird.

**11.** Verfahren nach einem der vorherigen Ansprüche, **dadurch gekennzeichnet, dass** das bedruckte und ggf. mit einer Schutzschicht versehene Trägermaterial einer Kurztakt (KT)-Presse zur Weiterbearbeitung, insbesondere inklusive einer Strukturierung zugeführt wird.

**12.** Vorrichtung, dazu eingerichtet ein Verfahren zur Online-Qualitätskontrolle von Dekordrucken auf Trägermaterialien nach einem der Ansprüche 1 bis 11 durchzuführen, umfassend

- mindestens ein Mittel zum Erzeugen mindestens eines hyperspektralen digitalen Bildes eines Druckdekors;
- mindestens ein Mittel zum Kalibrieren des Dekors auf Basis hyperspektraler digitaler Bilder;
- mindestens ein Mittel zum Erzeugen und Speichern eines digitalen Soll-Bildes des Druckdekors mit einer Auflösung im Bereich von 4 bis 36 Megapixel im L*a*b oder L*C*h Farbraum;
- Mindestens ein Mittel zum Erstellen von mindestens einem ersten Druckdekor auf mindestens einem ersten Trägermaterial;
- Mindestens einen Farbscanner oder eine Digitalkamera zum Erzeugen und Speichern mindestens eines digitalen Ist-Bildes des gedruckten Dekors auf dem mindestens einem ersten Trägermaterial mit einer Auflösung im Bereich von 4 bis 36 Megapixel;
- Mindestens ein Mittel zur Ermittlung von Farbabweichungen zwischen dem digitalen Soll-Bild und dem digitalen Ist-Bild im L*a*b oder L*C*h Farbraum;
- Mindestens ein Mittel zum Anpassen/Steuern des Dekordrucks beim Bedrucken mindestens einer Seite weiterer Trägermaterialien unter Ausbildung einer Dekorschicht derart, dass Farbabweichungen im L*a*b oder L*C*h Farbraum zwischen dem digitalen Soll-Bild und digitalen Ist-Bildern der gedruckten Dekore auf den weiteren Trägermaterialien nur unterhalb eines vorgegebenen Sollwertes auftreten.

**13.** Vorrichtung nach Anspruch 12, **dadurch gekennzeichnet, dass** das Mittel zum Erzeugen eines hyperspektralen digitalen Bildes eines Druckdekors ein Hyperspektralscanner ist.

**14.** Vorrichtung nach Anspruch 12 oder 13, weiterhin umfassend mindestens ein Mittel zum Aufbringen einer Schutzschicht auf das mit dem jeweiligen Druckdekor versehene Trägermaterial.

**Claims**

**1.** Method for online quality control of decorative prints on substrates, comprising the similarity comparison of an actual image and a target image of the print decors and the adjustment of the decorative print when deviations of the colour values of the actual image from the colour values of the target image are detected during the production of a batch of substrates with a decorative layer, wherein

a) at least one hyperspectral digital image of a print decor is generated;
b) the print decor is calibrated by means of the at least one hyperspectral digital image by generating an average hyperspectral digital image of the print decor, the display of which requires a high computing power and a high storage capacity;

**characterized in that**, the method further comprises the steps of:

c) generating and storing a target digital image of the print decor by converting the average hyperspectral digital image of the print decor into an image file in L*a*b or L*C*h colour space with a resolution in the range of 4 to 36 megapixels;
d) creating at least one first print decor on at least one first substrate;
e) generating and storing at least one digital actual image of the printed decor on the at least one first substrate with a resolution in the range from 4 to 36 megapixels, by means of a colour scanner or a digital camera;
f) determination of colour deviations for one or more colour values of the L*a*b* colour space and/or the L*C*h° colour space between the digital target image and the digital actual image by a computer program;
g) printing at least one side of further substrates while forming a decorative layer in such a way that colour deviations between the digital target image and digital actual images of the printed decorations on the further substrate occur only below a predetermined nominal value or only within a predetermined tolerance range.

2. Method according to claim 1, **characterized in that** the generation of a hyperspectral digital image of a printed decor is carried out by means of a hyperspectral scanner.

3. Method according to one of the previous claims, **characterized in that** the digital target image is generated in method step c) by converting a calibrated hyperspectral image into an image file with a resolution in the range from 4 to 36 megapixels by means of a computer program or by printing the print decor on a substrate and subsequently scanning it by means of a colour scanner or photographing the printed decor by means of a digital camera.

4. Method according to one of the previous claims, **characterized in that** the generation of the digital image according to method steps c) and e) is carried out under equivalent conditions, in particular excluding changing external light influences and with identical resolution in the range of 4 to 36 megapixels.

5. Method according to one of the previous claims, **characterized in that** during the production of a batch of substrates with the formation of a decorative layer, the generation of digital actual images is carried out continuously and that the method steps f) and g) are repeated continuously.

6. Method according to one of the previous claims, **characterized in that** the printing of the substrate according to method steps d) and/or g) is carried out by means of gravure printing or digital direct printing.

7. Method according to one of the previous claims, **characterized in that** if colour deviations are detected in method step f),

   - a warning signal is issued to the operators of a printing line for substrates, or
   - an automatic adjustment of one or more colour values of the L*a*b* colour space and/or the L*C*h° colour space is carried out during the production of the print decor on the substrate in such a way that colour deviations between the digital target image and digital actual images of the printed decor on further substrates occur only below a specified nominal value or only within a specified tolerance range.

8. Method according to one of the previous claims, **characterized in that** the substrate is selected from a group comprising paper, glass, metal, foils, wood materials, in particular MDF or HDF boards, WPC boards, veneers, paint layers, plastic boards and inorganic carrier boards.

9. Method according to one of the previous claims, **characterized in that** the print decor produced by means of digital printing or the print decor produced by means of gravure printing using printing rollers is printed on uniformly pre-primed substrates.

10. Method according to one of the previous claims, **characterized in that** a protective layer is applied to the print decor or the print decors.

11. Method according to one of the previous claims, **characterized in that** the printed substrate, which may be provided with a protective layer, is fed to a short-cycle (KT) press for further processing, in particular including structuring.

12. Device, configured to carry out a process for online quality control of print decors on substrates according to one of the claims 1 to 11,
    comprising

   - at least one means for generating at least one hyperspectral digital image of a print decor;
   - at least one means for calibrating the decor based on hyperspectral digital images;
   - at least one means for generating and storing a digital target image of the print decor with a resolution in the range of 4 to 36 megapixels in the L*a*b or L*C*h colour space;
   - at least one means for creating at least one first print decor on at least one first substrate;
   - at least one colour scanner or a digital camera for generating and storing at least one digital actual image of the printed decor on the at least one first substrate with a resolution in the range of 4 to 36 megapixels;
   - at least one means for determining colour deviations between the digital target image and the digital actual image in the L*a*b or L*C*h colour space;
   - at least one means for adjusting/controlling the decor printing when printing at least one side of further substrates while forming a decorative layer in such a way that colour deviations in the L*a*b or L*C*h colour space between the digital target image and digital actual images of the printed decors on the further substrates occur only below a predetermined nominal value.

**13.** Device according to claim 12, **characterized in that** the means for generating a hyperspectral digital image of a print decor is a hyperspectral scanner.

**14.** Device according to claim 12 or 13, further comprising at least one means for applying a protective layer to the substrate provided with the respective print decor.

**Revendications**

**1.** Procédé de contrôle qualité en ligne d'impressions décoratives sur des matériaux porteurs, comprenant une comparaison de similitude entre une image réelle et une image de consigne des décors imprimés et l'adaptation du décor imprimé en cas de constatation d'écarts entre les valeurs chromatiques de l'image réelle et les valeurs chromatiques de l'image de consigne pendant la production d'un lot de matériaux porteurs munis d'une couche décorative,

a) au moins une image numérique hyperspectrale d'un décor imprimé étant générée ;
b) le décor imprimé étant étalonné au moyen de l'au moins une image numérique hyperspectrale en générant une image numérique hyperspectrale moyenne du décor imprimé, dont l'affichage nécessite une puissance de calcul élevée et une capacité de mémoire élevée ;

**caractérisé en ce que** le procédé comprend en outre les étapes suivantes :

c) génération et mémorisation d'une image de consigne numérique du décor imprimé par conversion de l'image numérique hyperspectrale moyenne du décor imprimé en un fichier d'image dans l'espace colorimétrique L*a*b ou L*C*h avec une résolution dans la plage de 4 à 36 mégapixels ;
d) création d'au moins un premier décor imprimé sur au moins un premier matériau porteur ;
e) génération et mémorisation d'au moins une image réelle numérique du décor imprimé sur l'au moins un premier matériau porteur avec une résolution dans la plage de 4 à 36 mégapixels au moyen d'un scanner à couleurs ou d'une caméra numérique ;
f) détermination des écarts chromatiques pour une ou plusieurs des valeurs chromatiques de l'espace colorimétrique L*a*b et/ou de l'espace colorimétrique L*C*h entre l'image de consigne numérique et l'image réelle numérique par un programme informatique ;
g) impression d'au moins un côté de matériaux supports supplémentaires en formant une couche décorative de telle sorte que les écarts chromatiques entre l'image de consigne numérique et les images réelles numériques des décors imprimés sur les matériaux supports supplémentaires ne se produisent qu'au-dessous d'une valeur de consigne prédéfinie ou seulement à l'intérieur d'une plage de tolérance prédéfinie.

**2.** Procédé selon la revendication 1, **caractérisé en ce que** la génération d'une image numérique hyperspectrale d'un décor imprimé est effectuée au moyen d'un scanner hyperspectral.

**3.** Procédé selon l'une des revendications précédentes, **caractérisé en ce que** l'image de consigne numérique à l'étape c) est générée par conversion d'une image hyperspectrale étalonnée en un fichier d'image avec une résolution dans la plage de 4 à 36 mégapixels au moyen d'un programme informatique ou par impression d'un matériau porteur avec un décor imprimé et ensuite la numérisation au moyen d'un scanner à couleurs ou la photographie du décor imprimé au moyen d'une caméra numérique.

**4.** Procédé selon l'une des revendications précédentes, **caractérisé en ce que** la génération de photographies numériques selon les étapes c) et e) du procédé s'effectue sous des conditions équivalentes, notamment en excluant les influences lumineuses externes variables et avec une résolution identique dans la plage de 4 à 36 mégapixels.

**5.** Procédé selon l'une des revendications précédentes, **caractérisé en ce que** la génération d'images réelles numériques est effectuée continuellement pendant la production d'un lot de matériaux porteurs en formant une couche décorative et **en ce que** les étapes f) et g) du procédé sont continuellement répétées.

**6.** Procédé selon l'une des revendications précédentes, **caractérisé en ce que** l'impression du matériau porteur selon les étapes d) et/ou g) du procédé est effectuée au moyen d'impression en taille douce ou d'impression directe numérique.

**7.** Procédé selon l'une des revendications précédentes, **caractérisé en ce que** lorsque des écarts chromatiques sont constatés à l'étape f) du procédé,

- un signal d'alerte est délivré à l'attention du personnel opérateur d'une ligne d'impression pour des matériaux porteurs, ou
- une adaptation automatique d'une ou plusieurs valeurs chromatiques de l'espace colorimétrique L*a*b et/ou de l'espace colorimétrique L*C*h est réalisée lors de la génération du décor imprimé sur les matériaux porteurs de telle sorte que les écarts chromatiques entre l'image de consigne numérique et les images réelles numériques des décors imprimés sur des matériaux porteurs supplémentaires ne se produisent qu'au-dessous d'une valeur de consigne prédéfinie ou seulement à l'intérieur d'une plage de tolérance prédéfinie.

**8.** Procédé selon l'une des revendications précédentes, **caractérisé en ce que** le matériau porteur est choisi d'un groupe contenant le papier, le verre, le métal, des films, des matériaux dérivés du bois, notamment des panneaux de particules à moyenne ou haute densité, des panneaux en WPC, du contreplaqué, des couches de vernis, des panneaux en matière plastique et des panneaux porteurs inorganiques.

**9.** Procédé selon l'une des revendications précédentes, **caractérisé en ce que** le décor imprimé créé au moyen de l'impression numérique ou le décor imprimé créé au moyen de l'impression en taille douce en utilisant des cylindres d'impression est imprimé sur des matériaux porteurs ayant reçu une couche de fond homogène.

**10.** Procédé selon l'une des revendications précédentes, **caractérisé en ce qu'**une couche protectrice est appliquée sur le décor imprimé ou les décors imprimés.

**11.** Procédé selon l'une des revendications précédentes, **caractérisé en ce que** le matériau porteur imprimé et éventuellement pourvu d'une couche protectrice est acheminé à une presse à cycle court (KT) pour traitement postérieur, incluant notamment une structuration.

**12.** Dispositif, conçu pour mettre en œuvre un procédé de contrôle qualité en ligne d'impressions décoratives sur des matériaux porteurs selon l'une des revendications 1 à 11, comprenant

- au moins un moyen destiné à générer au moins une image numérique hyperspectrale d'un décor imprimé ;
- au moins un moyen destiné à étalonner le décor sur la base d'images numériques hyperspectrales ;
- au moins un moyen destiné à générer et à mémoriser une image de consigne numérique du décor imprimé avec une résolution dans la plage de 4 à 36 mégapixels dans l'espace colorimétrique L*a*b ou L*C*h ;
- au moins un moyen destiné à créer au moins un premier décor imprimé sur au moins un premier matériau porteur ;
- au moins un scanner à couleurs ou une caméra numérique destiné à générer et à mémoriser au moins une image réelle numérique du décor imprimé sur l'au moins un premier matériau porteur avec une résolution dans la plage de 4 à 36 mégapixels ;
- au moins un moyen destiné à déterminer des écarts chromatiques entre l'image de consigne numérique et l'image réelle numérique dans l'espace colorimétrique L*a*b ou L*C*h ;
- au moins un moyen destiné à adapter/commander l'impression décorative lors de l'impression d'au moins un côté de matériaux supports supplémentaires en formant une couche décorative de telle sorte que les écarts chromatiques dans l'espace colorimétrique L*a*b ou L*C*h entre l'image de consigne numérique et les images réelles numériques des décors imprimés sur les matériaux supports supplémentaires ne se produisent qu'au-dessous d'une valeur de consigne prédéfinie.

**13.** Dispositif selon la revendication 12, **caractérisé en ce que** le moyen destiné à générer une image numérique hyperspectrale d'un décor imprimé est un scanner hyperspectral.

**14.** Dispositif selon la revendication 12 ou 13, comprenant en outre au moins un moyen destiné à appliquer une couche protectrice sur le matériau porteur pourvu du décor imprimé respectif.

# FIG 1

Kalibration D1

Produktion D1

| P1 D1 |
| --- |
| ACMS P1 D1 |

| P2 D1 |
| --- |
| ACMS P2 D1 |

| P3 D1 |
| --- |
| ACMS P3 D1 |

| Pn D1 |
| --- |
| ACMS |

| D1 |
| --- |
| ACMS D1 |

Vergleich

| Pn D1 |
| --- |
| ACMS Pn D1 |

EP 3 578 939 B1

# FIG 2

Kalibration D1     Produktion D1

| P1 D1 | P2 D1 | P3 D1 | Pn D1 |
| ACMS P1 D1 | ACMS P2 D1 | ACMS P3 D1 | F Pn D1 |

D1

ACMS D1

F D1 — Vergleich —

EP 3 578 939 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 504213 A4
- DE 19908296 A1
- WO 03047865 A
- EP 2777942 A1
- DE 102013104208 B3
- AT 505556 A4
- WO 2008034156 A1
- WO 2008080185 A2